# EUROPÄISCHE PATENTSCHRIFT

(11) **EP 3 563 173 B1**
(45) Veröffentlichungstag und Bekanntmachung des Hinweises auf die Patenterteilung: **06.01.2021**
(21) Anmeldenummer: 17804137.2
(22) Anmeldetag: 16.11.2017
(51) Int. Cl.: G01S 13/931, G01S 7/40

(54) **VERFAHREN ZUM BETRIEB EINES FAHRERASSISTENZSYSTEMS FÜR KRAFTFAHRZEUGE**
METHOD FOR OPERATING A DRIVER ASSISTANCE SYSTEM FOR MOTOR VEHICLES
PROCÉDÉ POUR FAIRE FONCTIONNER UN SYSTÈME D'AIDE À LA CONDUITE POUR VÉHICULES AUTOMOBILES

(30) Priorität: 29.12.2016 DE 102016226312
(43) Veröffentlichungstag der Anmeldung: 06.11.2019
(73) Patentinhaber: Robert Bosch GmbH, 70442 Stuttgart (DE)
(72) Erfinder: WETOSCHKIN, Igor, 71691 Freiberg (DE); DAROCZI, Gabor Balazs, 1138 Budapest (HU)
(86) Internationale Anmeldenummer: PCT/EP2017/079403
(87) Internationale Veröffentlichungsnummer: WO 2018/121914

(56) Entgegenhaltungen:
- DE-A1-102013 202 377
- US-A- 5 977 906

## Beschreibung

Die Erfindung betrifft ein Verfahren zum Betrieb eines Fahrerassistenzsystems für Kraftfahrzeuge, das einen Radarsensor aufweist und einen variablen Funktionsumfang hat, mit den folgenden Schritten:
- schätzen des Justagefehlers aufgrund einer Messung über einen begrenzten ersten Betriebszeitraum,
- einschränken des Funktionsumfangs des Fahrerassistenzsystems in Abhängigkeit von dem geschätzten Justagefehler,
- fortsetzen der Messung während des Betriebs mit eingeschränktem Funktionsumfang innerhalb eines zweiten Betriebszeitraumes.

Die Funktion eines Fahrerassistenzsystems für Kraftfahrzeuge basiert häufig auf den Ortungsdaten eines vorn im Fahrzeug eingebauten Radarsensors, mit dem Abstände, Relativgeschwindigkeiten, Azimutwinkel und ggf. auch Elevationswinkel vorausfahrender Fahrzeuge und anderer Objekte im Umfeld des Fahrzeugs gemessen werden. Auf der Grundlage dieser Daten stellt das Fahrerassistenzsystem dann verschiedene Assistenzfunktionen zur Verfügung, beispielsweise eine automatische Abstandsregelung, Kollisionswarnfunktionen, die automatische Einleitung von Notbremsungen zur Kollisionsvermeidung, und dergleichen. Eine fehlerfreie und sichere Funktion des Fahrerassistenzsystems setzt eine zutreffende Bewertung des Verkehrsumfelds voraus, einschließlich korrekter Annahmen über die Azimutwinkel der georteten Objekte. Korrekte Winkelmessungen sind mit Hilfe des Radarsensors jedoch nur möglich, wenn der Sensor beim Einbau in das Fahrzeug korrekt justiert wurde, so dass die Richtung, die der Azimutwinkelmessung von 0° entspricht, auch wirklich die Vorwärts-Richtung des Fahrzeugs ist.

### Stand der Technik

Es sind Fahrerassistenzsysteme mit einem Kalibriermodul bekannt, das es erlaubt, die korrekte Justierung des Radarsensors bei laufendem Betrieb des Fahrzeugs zu überprüfen und erkannte Justagefehler, sofern sie noch innerhalb eines tolerierbaren Bereiches liegen, rechnerisch zu kompensieren (US 5 977 906 A).

Eine quantitative Bestimmung eines Justagefehlers ist jedoch in der Regel nur durch statistische Auswertung von Messungen möglich, die über einen gewissen Zeitraum erhoben werden. Eine hinreichend genaue und verlässliche Bestimmung des Justagefehlers erfordert deshalb eine bestimmte Messdauer, mit der Folge, dass, falls ein Justagefehler plötzlich auftritt, beispielsweise aufgrund von Erschütterungen des Fahrzeugs, wie sie häufig bei einem leichten "Rempler" auf einem Parkplatz auftreten, der Fehler erst mit beträchtlicher Verzögerung erkannt und kompensiert werden kann. Wenn man andererseits verlangt, dass die Fahrerassistenzfunktionen nur dann genutzt werden, wenn Justagefehler mit ausreichender Sicherzeit erkannt und kompensiert wurden, so ist die Verfügbarkeit der Assistenzfunktionen eingeschränkt.

Ein Verfahren der eingangs genannten Art ist aus DE 10 2013 202377 A1 bekannt. Die fortgesetzten Messungen dienen bei diesem Verfahren zur Aufrechterhaltung der Funktion des Fahrerassistenzsystems in dem eingeschränkten Umfang.

### Offenbarung der Erfindung

Aufgabe der Erfindung ist es deshalb, ein Verfahren anzugeben, das es erlaubt, Justagefehler schneller zu erkennen und die Verfügbarkeit des Fahrerassistenzsystems zu erhöhen.

Diese Aufgabe wird erfindungsgemäß dadurch gelöst, dass
- bei laufendem Betrieb des Radarsensors eine fortlaufende Nachkalibrierung des Radarsensors zur Kompensation von Justagefehlern erfolgt,
- auf der Basis der fortgesetzten Messung innerhalb eines zweiten Betriebszeitraumes die Schätzgenauigkeit des Justagefehlers verbessert wird, und
- der Funktionsumfang nach Maßgabe der Verbesserung der Schätzgenauigkeit erweitert wird.

Die Erfindung beruht auf der Überlegung, dass auch dann, wenn die genaue Größe eines Justagefehlers noch nicht mit Sicherzeit feststeht, gleichwohl eine Nutzung des Fahrerassistenzsystems möglich ist, sofern nur der Funktionsumfang in Anbetracht der Unsicherheit hinsichtlich des Justagefehlers geeignet eingeschränkt wird. Beispielsweise wirken sich Justagefehler, die zu einer verfälschten Winkelmessung führen, naturgemäß vor allem bei der Positionsbestimmung von Objekten aus, die sich in einem sehr großen Abstand befinden. Der Unsicherheit bei der Winkelmessung kann deshalb dadurch Rechnung getragen werden, dass man die genutzte Reichweite des Radarsensors einschränkt. So kann trotz einer gewissen Einschränkung des Funktionsumfangs ein wesentlicher Teil der Fahrerassistenzfunktionen genutzt werden, so dass sich die Verfügbarkeit insgesamt erhöht. Während des weiteren Betriebs des Fahrerassistenzsystems mit eingeschränktem Funktionsumfang ist es dann möglich, die Schätzung des Justagefehlers durch fortgesetzte Messungen immer weiter zu verbessern. Wenn dabei mit hinreichender Zuverlässigkeit festgestellt wird, dass der Justagefehler noch innerhalb eines tolerierbaren Bereiches liegt, so kann der Funktionsumfang des Fahrerassistenzsystems wieder erweitert werden.

Dieses Verfahren ermöglicht einen Verzicht auf die Erstkalibrierung des Radarsensors beim Einbau in das Fahrzeug oder zumindest eine Vereinfachung und Verkürzung der Prozeduren bei der Erstkalibrierung. Auf diese Weise wird eine Verkürzung der Montagezeiten und damit eine Kostenersparnis erreicht.

Weiterhin bietet die Erfindung den wesentlichen Vorteil, dass das System schneller auf Justagefehler reagiert, die erst später, während des Betriebs des Fahrzeuges spontan auftreten. Schon nach Ablauf des relativ kurzen ersten Betriebszeitraums seit Eintreten des Justagefehlers ist eine grobe Schätzung der Dejustage möglich, die zunächst einen Anfangsverdacht für das Vorliegen eines Justagefehlers begründen kann. Das System reagiert darauf mit einer Einschränkung des Funktionsumfangs und einer Fortsetzung der Messungen, bis schließlich der Justagefehler mit höherer Genauigkeit quantitativ erfasst werden konnte. Sofern dann die genaueren Messungen den Verdacht auf das Vorliegen eines Justagefehlers nicht bestätigen oder eine Kompensation erlauben, kann der Funktionsumfang automatisch wieder erweitert werden.

Vorteilhafte Ausgestaltungen und Weiterbildungen der Erfindung sind in den Unteransprüchen angegeben.

Die Art und das Ausmaß der Einschränkungen des Funktionsumfangs kann von dem Ergebnis der Schätzung des Justagefehlers abhängen. Wenn sich dann während des zweiten Betriebsraumes die Schätzgenauigkeit aufgrund der größeren Messdauer zunehmend verbessert, so können die Einschränkungen des Funktionsumfangs sukzessive wieder rückgängig gemacht werden, bis schließlich wieder der volle Funktionsumfang zur Verfügung steht.

Gegenstand der Erfindung ist auch ein Fahrerassistenzsystem, das für die Durchführung des oben beschriebenen Verfahrens ausgebildet ist.

Im folgenden wird ein Ausführungsbeispiel anhand der Zeichnung näher erläutert.

Es zeigen:
- Fig. 1: ein Blockdiagramm eines erfindungsgemäßen Fahrerassistenzsystems mit Darstellung eines Radarsensors in einer Seitenansicht;
- Fig. 2: eine Prinzipskizze zur Erläuterung eines Verfahrens zur Schätzung eines Justagefehlers des Radarsensors, mit Darstellung des Radarsensors nach Fig. 1 in der Draufsicht;
- Fig. 3: ein Zeitdiagramm zur Erläuterung des erfindungsgemäßen Verfahrens;
- Fig. 4: eine Darstellung von Justagefehlern des Radarsensors in Azimut und Elevation; und
- Fig. 5: ein Flussdiagramm zur Erläuterung des erfindungsgemäßen Verfahrens.

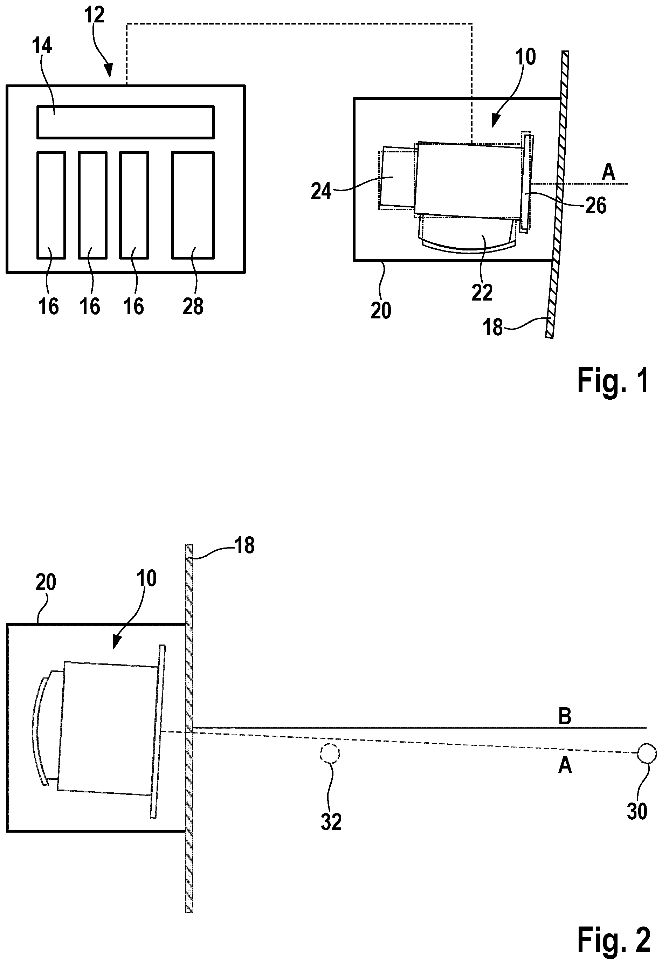

In Fig. 1 ist als Blockdiagramm ein Fahrerassistenzsystem für ein Kraftfahrzeug dargestellt. Das Fahrerassistenzsystem weist einen Radarsensor 10 und ein elektronisches Steuergerät 12 auf, das Ortungsdaten des Radarsensors 10 auswertet und auf der Grundlage dieser Daten nicht gezeigte Aktoren des Kraftfahrzeugs steuert. Zu diesem Zweck weist das Steuergerät 12 ein Auswertungsmodul 14 auf, das die Ortungsdaten des Radarsensors 10 auswertet, sowie mehrere Assistenzmodule 16 auf, die verschiedene Assistenzfunktionen ausführen, beispielsweise eine Abstandsregelung, eine Stop & Go Funktion für den Stauverkehr, und eine Kollisionswarnfunktion.

Der Radarsensor 10 ist hinter einem Radom 18, beispielsweise einer aus Kunststoff bestehenden und daher für Mikrowellen durchlässigen vorderen Stoßstange des Fahrzeugs, in einem Einbaugehäuse 20 montiert und mittels einer ersten mechanischen Justagevorrichtung 22 in Elevation und mittels einer zweiten mechanischen Justagevorrichtung 24 im Azimut justierbar. Eine strichpunktiert dargestellte Achse A gibt die hauptsächliche Abstrahl- und Empfangsrichtung des Radarsensors an und verläuft durch die Mitte einer planaren Gruppenantenne 26 des Radarsensors und rechtwinklig zur Ebene dieser Gruppenantenne.

Beim Einbau des Radarsensors 10 kann es sowohl in Elevation als auch im Azimut zu Justagefehlern kommen. Ein Justagefehler in Elevation ist in Fig. 1 strichpunktiert angedeutet. Ebenso können Justagefehler auch spontan während des Betriebs des Fahrzeugs entstehen, beispielsweise aufgrund von Erschütterungen bei leichten Kollisionen der Fahrzeugkarosserie mit anderen Objekten oder (in Elevation) bei außergewöhnlich schwerer Beladung des Fahrzeugs. Das Steuergerät 12 weist deshalb ein Kalibriermodul 28 (Softwaremodul) auf, das in der Lage ist, solche Justagefehler anhand der vom Radarsensor 10 gelieferten Daten automatisch zu erkennen und die Ergebnisse der Winkelmessungen dann entsprechend zu korrigieren.

In Fig. 2 ist beispielhaft illustriert, wie das Kalibriermodul 28 Montagefehler erkennen kann. Gezeigt ist hier ein Justagefehler im Azimut, der sich darin äußert, dass die Sende- und Empfangsrichtung des Radarsensors 10 (Achse A) mit der Längsmittelachse B des Kraftfahrzeugs einen gewissen Winkel bildet. Als Beispiel ist hier angenommen, dass sich ein Objekt 30 genau auf der Achse A des Radarsensors befindet. Der für dieses Objekte gemessene Azimutwinkel wäre somit 0°. Wenn der Radarsensor korrekt justiert wäre, so würde das bedeuten, dass sich das Objekt 30 auf der Längsmittelachse B des Fahrzeugs befindet und somit der gemessene Azimutwinkel unabhängig vom Abstand des Objekts 30 wäre, also auch bei Entfernung oder Annäherung des Objekts 30 den Wert von 0° beibehalten würde. Mit dem Bezugszeichen 30' ist in Fig. 2 eine Position des Objekts 30 bezeichnet, in der es bei gleicher lateraler Ablage einen geringeren Abstand zum Radarsensor hat. Man erkennt, dass die Position 30 nicht mehr auf der Achse A liegt und somit der gemessene Azimutwinkel von 0° verschieden ist. Anhand dieser Diskrepanz zwischen dem erwarteten Ergebnis der Winkelmessung (0°) und dem tatsächlich erhaltenen Ergebnis kann das Kalibriermodul 28 das Vorliegen eines Justagefehlers erkennen und quantitativ bestimmen.

Allerdings muss für die quantitative Bestimmung des Justagefehlers unterstellt werden, dass sowohl das Objekt 30 als auch das eigene Fahrzeug und damit der Radarsensor 10 ihre laterale Position unverändert beibehalten. Änderungen der lateralen Position des eigenen Fahrzeugs können durch Messung der Querbeschleunigung oder durch Erfassung des Lenkeinschlags bestimmt werden. Bei dem Objekt 30 ist es hingegen nicht sicher, dass die laterale Position wirklich unverändert bleibt. Um ein verlässliches oder zumindest annähernd korrektes Ergebnis für den Justagefehler zu erhalten, müssen deshalb im allgemeinen Messungen der in Fig. 2 (vereinfacht) dargestellten Art mehrfach für eine Vielzahl von Objekten wiederholt und statistisch ausgewertet werden, so dass sich unrichtige Annahmen und statistische Schwankungen herausmitteln. Die Genauigkeit, mit welcher der Justagefehler quantitativ bestimmt werden kann, verbessert sich deshalb mit zunehmender Messdauer. Im Umkehrschluss bedeutet dies, dass im Prinzip eine verlässliche Erkennung und Korrektur von Justagefehlern erst mit gewisser zeitlicher Verzögerung möglich ist, mit unerwünschten Implikationen für die Verkehrssicherheit.

Bisher ist es deshalb üblich, die Justierung des Radarsensors 10 unmittelbar nach dem Einbau in einen Messstand unter kontrollierten Bedingungen zu prüfen. Wenn sich dabei zeigt, dass zwar ein gewisser Justagefehler vorhanden ist, dieser jedoch relativ klein ist und innerhalb eines zulässigen Bereiches liegt, so dass die Funktion des Fahrerassistenzsystems nicht beeinträchtigt wird, so kann man auf eine mechanische Nachjustierung des Radarsensors verzichten und statt dessen den gemessenen Justagefehler rechnerisch im Kalibriermodul 28 kompensieren.

Im folgenden wird ein Verfahren beschrieben, das es erlaubt, den Aufwand für solche Kalibrationsmessungen im Messstand zu reduzieren oder auf solche Kalirationsmessungen ganz zu verzichten, ohne dass dadurch Sicherheitsrisiken entstehen.

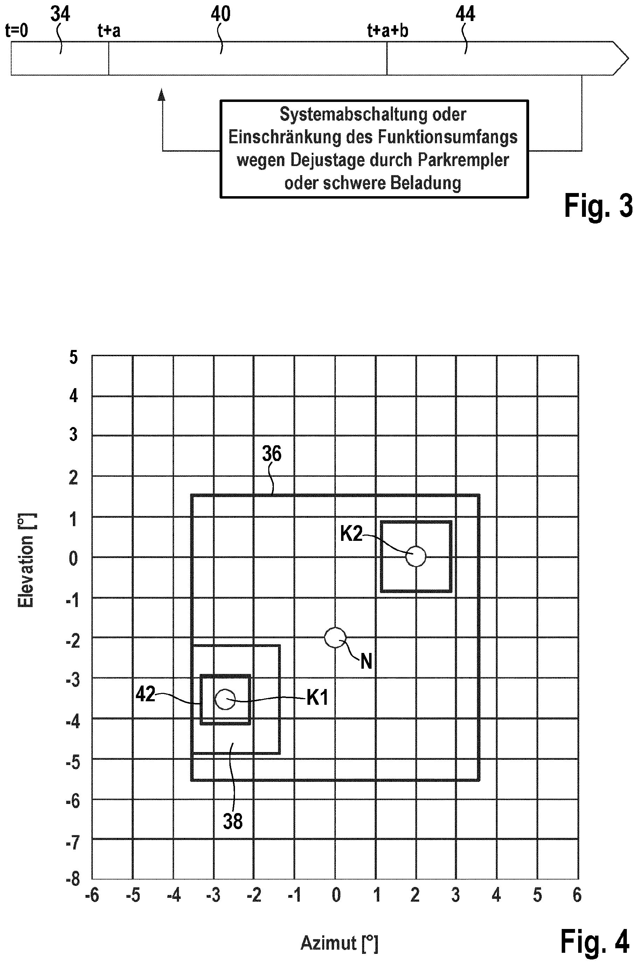

In Fig. 3 ist der Verfahrensablauf in einem Zeitdiagramm dargestellt. Der Zeitpunkt t = 0 ist der Zeitpunkt der Inbetriebnahme des Fahrzeugs und des Fahrerassistenzsystems. An diesen Zeitpunkt schließt sich eine Kalibrierungssphase 34 (begrenzter erster Betriebszeitraum) an, in der die Justage des Radarsensors mit Hilfe des Kalibriermoduls 28 unter normalen Fahrbedingungen geprüft wird. Die Kalibrierungssphase hat eine Dauer a, die einer zurückgelegten Fahrtstrecke von nur weinigen Metern entspricht. Innerhalb dieser verhältnismäßig kurzen Zeitspanne treten bei der Messung des Justagefehlers verhältnismäßig große Messtoleranzen auf.

Fig. 4 zeigt schematisch ein Raumwinkelsegment, das sich über Azimutwinkel von -6° bis +6° und über Elevationswinkel von -8° bis +5° erstreckt. Ein Punkt N bezeichnet die nominale Justageposition des Radarsensors . Diese liegt in dem hier gezeigten Beispiel bei dem Azimutwinkel 0° und dem Elevationswinkel -2°. Ein auf den Punkt N zentriertes Quadrat 36 bezeichnet einen zulässigen Bereich, innerhalb dessen Justagefehler toleriert werden können. Wenn sicher feststeht, dass der tatsächliche Justagefehler des Radarsensors 10 innerhalb dieses Bereiches liegt, so kann die Dejustage rechnerisch korrigiert werden und dass alle Assistenzfunktionen 16 können benutzt werden.

Ein Punkt K1 bezeichnet das Ergebnis einer Kalibrationsmessung, das am Ende der Kalibrierungssphase 34 erhalten wurde. Dieser Punkt liegt innerhalb des Quadrats 36. Wenn also der Punkt K1 den wirklichen Justagefehler korrekt angäbe, so könnte der Justagefehler toleriert werden. Aufgrund der kurzen Messzeit ist die Messung jedoch mit erheblichen Fehlertoleranzen behaftet. Der Bereich der Fehlertoleranzen wird hier durch ein auf den Punkt K1 zentriertes Feld 38 angegeben. Es ist somit zwar wahrscheinlich aber noch nicht sicher, dass der Justagefehler innerhalb des zulässigen Bereiches liegt. Ein sicherer Betrieb der Assistenzfunktionen kann deshalb nicht ohne weiteres gewährleistet werden.

Dennoch ist aber eine sichere Nutzung der Assistenzfunktionen möglich, sofern deren Funktionsumfang geeignet eingeschränkt wird. Als einfaches Beispiel soll angenommen werden, dass es für eine sichere Nutzung der Assistenzfunktionen mit vollem Funktionsumfang erforderlich ist, dass die lateralen Positionen der georteten Objekte (in der Richtung quer zur Längsmittelachse B des Fahrzeugs) mit einer Genauigkeit von +/- 0,2 m bekannt sind. Dazu ist es erforderlich, die Azimutwinkel der Objekte mit einer Genauigkeit zu messen, die vom jeweiligen Abstand des Objekts abhängig ist. Bei großen Objektabständen ist eine genauere Winkelmessung erforderlich, während bei kleineren Objektabständen größere Messfehler bei der Winkelmessung toleriert werden können. Es ist deshalb möglich, die Assistenzfunktion in eingeschränktem Umfang zu nutzen, indem die Reichweite des Radarsensors gegenüber der nominalen Reichweite begrenzt wird. Das heißt, der Funktionsumfang der Assistenzfunktionen wird dadurch eingeschränkt, dass nur noch Objekte ausgewertet werden, die innerhalb der begrenzten Reichweite liegen.

In dem Zeitdiagramm in Fig. 3 würde diese Einschränkung des Funktionsumfangs am Ende der Kalibrierungssphase 34, zum Zeitpunkt t + a stattfinden. An diesen Zeitpunkt schließt sich eine Validierungsphase 40 (zweiter Betriebszeitraum) an, in der das Fahrerassistenzsystem mit eingeschränktem Funktionsumfang benutzt wird, während die Kalibrationsmessungen fortgesetzt werden. Aufgrund der längeren Messzeit verbessert sich die Genauigkeit, mit der der Justagefehler gemessen werden kann. In Fig. 4 wird dies dadurch dargestellt, dass der Fehlertoleranzbereich um den Punkt K1 auf die Größe des Quadrats 42 schrumpft. Die Messung des Justagefehlers mit dieser engeren Fehlertoleranz ist zum Zeitpunkt t + a + b abgeschlossen. Da zu diesem Zeitpunkt bekannt ist, dass der wirkliche Justagefehler innerhalb des engeren zulässigen Bereiches liegt, kann die Reichweite des Radarsensors wieder auf den nominalen Wert vergrößert werden, so dass wieder der volle Funktionsumfang des Fahrerassistenzsystems zur Verfügung steht.

Damit beginnt eine Nutzungsphase 44 des Fahrerassistenzsystems, die im Prinzip zeitlich unbegrenzt ist. Der Justagefehler, angegeben durch den Punkt K1, ist nun mit hinreichender Genauigkeit bekannt und lässt sich im Kalibriermodul 28 rechnerisch kompensieren, so dass das Verkehrsumfeld korrekt erfasst werden kann.

Es versteht sich, dass die obigen Überlegungen sinngemäß auch für Justagefehler in Elevation gelten. Ebenso versteht es sich, dass die Einschränkung des Funktionsumfangs nicht notwendigerweise in einer Begrenzung der Reichweite bestehen muss, sondern beispielsweise auch darin bestehen kann, dass bestimmte Assistenzfunktionen ganz abgeschaltet werden.

Zum Zeitpunkt t + a kann der Fahrer des Fahrzeugs eine Warnmeldung erhalten, die ihn darauf hinweist, dass vorübergehend nur ein eingeschränkter Funktionsumfang des Fahrerassistenzsystems zur Verfügung steht. Ein solcher Hinweise ist allerdings nicht in allen Fällen erforderlich. Die volle Reichweite des Radarsensors wird im allgemeinen nur bei der Abstandsregelung bei relativ hoher Fahrgeschwindigkeit benötigt, da dann die nötigen Sicherheitsabstände zwischen den Fahrzeugen so groß sind, dass die volle Reichweite des Radarsensors genutzt werden muss, damit die Sicherheitsabstände zuverlässig eingehalten werden können. Bei niedrigerer Fahrgeschwindigkeit brauchen dagegen sehr weit entfernte Objekte noch nicht berücksichtigt zu werden, so dass die Begrenzung der Reichweite keine gravierenden Folgen hat und es somit nicht erforderlich ist, den Fahrer über diese Maßnahme zu informieren.

Im hier gezeigten Ausführungsbeispiel werden Kalibrationsmessungen auch während der Nutzungsphase 44 fortgesetzt. Beispielsweise wird der Justagefehler ständig gemessen, und wenn sich nach einer gewissen Anzahl von Messungen und statistischer Auswertung abzeichnet, dass sich die Justierung verändert hat (etwa infolge eines Parkremplers), so dass der Justagefehler nicht mehr durch den Punkt K1 in Fig. 4, sondern beispielsweise durch den Punkt K2 repräsentiert wird, und wenn aufgrund der kurzen Messzeit der Fehlertoleranzbereich noch zu groß für eine endgültige Aussage ist, so wird der Funktionsumfang erneut eingeschränkt (oder im Extremfall die Assistenzfunktion ganz abgeschaltet) und eine neue Validierungsphase 40 eingeleitet. Wenn am Ende dieser Validierungsphase mit ausreichender Sicherheit festgestellt werden kann, dass der Justagefehler innerhalb des zulässigen Bereiches liegt, so wird der Funktionsumfang wieder erweitert und die Nutzungsphase 44 mit voller Funktionalität des Fahrerassistenzsystems fortgesetzt.

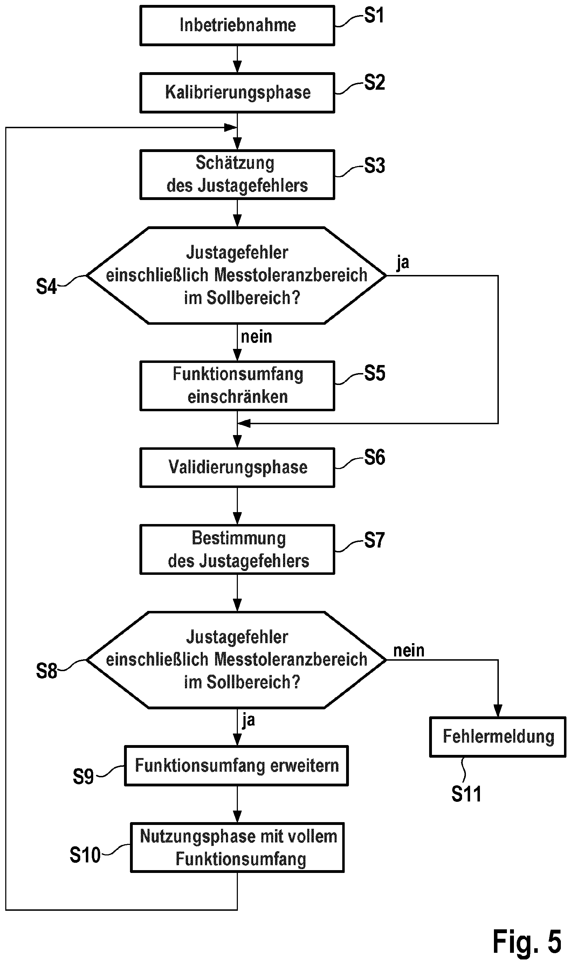

In Fig. 5 sind die wesentlichen Schritte des oben beschriebenen Verfahrens in einem Flussdiagramm dargestellt.

In Schritt S1 wird das Fahrerassistenzsystem in Betrieb genommen, ohne dass dabei zwingend eine Kalibrationsmessung am Messstand durchgeführt werden muss. Es folgt dann die Kalibrierungsphase 34, in der in Schritt S2 die Kalibrationsmessungen unter normalen Fahrbedingungen durchgeführt werden. Die Kalibrierungsphase endet mit der (groben) Schätzung des Justagefehlers in Schritt S3. In Schritt S4 wird geprüft, ob der Justagefehler einschließlich der Messtoleranz innerhalb des zulässigen Bereiches liegt. Wenn das nicht der Fall ist (nein), so wird der Funktionsumfang des Fahrerassistenzsystems in Schritt S5 eingeschränkt, und mit Schritt S6 beginnt die Validierungsphase. Falls die Abfrage in Schritt S4 ein positives Ergebnis hat (ja) wird der Schritt S5 übersprungen.

In Schritt S7 wird der Justagefehler erneut bestimmt, aufgrund der längeren Messzeiten jedoch mit höherer Genauigkeit.

Die Abfrage in Schritt S8 entspricht derjenigen in Schritt S4. Wenn der Justagefehler tolerabel ist (Ergebnis "ja"), so wird in Schritt S9 der Funktionsumfang wieder erweitert, und mit Schritt S10 beginnt die Nutzungsphase 44. Nach Einleitung der Nutzungsphase erfolgt ein Rücksprung zu Schritt S3. Die erneute Schätzung des Justagefehlers in Schritt S3 entspricht der Kontrollmessung innerhalb der Nutzungsphase 44 in Fig. 3.

Wenn sich in Schritt S8 zeigt, dass der Justagefehler nicht tolerierbar ist (Ergebnis "nein"), so bleibt der Funktionsumfang eingeschränkt, und der Fahrer erhält in Schritt S11 eine Fehlermeldung und gegebenenfalls die Aufforderung, eine Werkstatt aufzusuchen. Wahlweise kann in diesem Schritt auch das Fahrerassistenzsystem komplett abgeschaltet werden. Als Alternative ist es möglich, das Fahrerassistenzsystem mit eingeschränktem Funktionsumfang weiter zu benutzen und auch die Kontrollmessungen regelmäßig zu wiederholen, um etwaige weitere Änderungen der Justierung zu erfassen und angemessen darauf zu reagieren.

## Patentansprüche

1. Verfahren zum Betrieb eines Fahrerassistenzsystems für Kraftfahrzeuge, das einen Radarsensor (10) aufweist und einen variablen Funktionsumfang hat, mit den folgenden Schritten:
- schätzen des Justagefehlers aufgrund einer Messung über einen begrenzten ersten Betriebszeitraum (34; 46),
- einschränken des Funktionsumfangs des Fahrerassistenzsystems in Abhängigkeit von dem geschätzten Justagefehler,
- fortsetzen der Messung während des Betriebs mit eingeschränktem Funktionsumfang innerhalb eines zweiten Betriebszeitraumes (40), **dadurch gekennzeichnet, dass**
- bei laufendem Betrieb des Radarsensors eine fortlaufende Nachkalibrierung des Radarsensors zur Kompensation von Justagefehlern erfolgt,
- auf der Basis der fortgesetzten Messung innerhalb eines zweiten Betriebszeitraumes die Schätzgenauigkeit des Justagefehlers verbessert wird, und
- der Funktionsumfang nach Maßgabe der Verbesserung der Schätzgenauigkeit erweitert wird.

2. Verfahren nach Anspruch 1, bei dem die Einschränkung des Funktionsumfangs eine Reduzierung der Reichweite des Radarsensors (10) einschließt.

3. Verfahren nach Anspruch 1 oder 2, bei dem das Fahrerassistenzsystem mehrere Assistenzfunktionen (16) aufweist und die Einschränkung des Funktionsumfangs eine Abschaltung einer dieser Assistenzfunktionen einschließt.

4. Verfahren nach einem der vorstehenden Ansprüche, bei dem die Erweiterung des Funktionsumfangs sukzessive in mehreren Schritten jeweils nach einer Verbesserung der Schätzgenauigkeit erfolgt.

5. Verfahren nach einem der vorstehenden Ansprüche, bei dem die Schritte der gemäß Anspruch 1 unmittelbar nach Inbetriebnahme des Fahrerassistenzsystems ausgeführt werden.

6. Verfahren nach einem der vorstehenden Ansprüche, bei dem die Schritte der gemäß Anspruch 1 während einer Nutzungsphase (44) des Fahrerassistenzsystems wiederholt ausgeführt werden.

7. Fahrerassistenzsystem mit einem Radarsensor (10) und einem Steuergerät (12), **dadurch gekennzeichnet, dass** das Steuergerät zur Ausführung des Verfahrens nach einem der vorstehenden Ansprüche ausgebildet ist.

## Claims

1. Method for operating a driver assistance system for motor vehicles, which system has a radar sensor (10) and a variable functional scope, comprising the following steps:
- estimating the adjustment error on the basis of a measurement over a limited first operating time period (34; 46),
- limiting the functional scope of the driver assistance system as a function of the estimated adjustment error,
- continuing the measurement during the operation with a limited functional scope within a second operating time period (40), **characterized in that**
- during ongoing operation of the radar sensor continuous re-calibration of the radar sensor is carried out in order to compensate for adjustment errors,
- the estimation accuracy of the adjustment error is improved on the basis of the continued measurement within a second operating time period, and
- the functional scope is extended in accordance with the improvement of the estimation accuracy.

2. Method according to Claim 1, in which the limitation of the functional scope includes reducing the range of the radar sensor (10).

3. Method according to Claim 1 or 2, in which the driver assistance system has a plurality of assistance functions (16), and the limitation of the functional scope includes switching off one of these assistance functions.

4. Method according to one of the preceding claims, in which the extension of the functional scope occurs successively in the plurality of steps, in each case after an improvement of the estimation accuracy.

5. Method according to one of the preceding claims, in which the steps according to Claim 1 are carried out directly after the driver assistance system is put into operation.

6. Method according to one of the preceding claims, in which the steps according to Claim 1 are carried out repeatedly during a use phase (44) of the driver assistance system.

7. Driver assistance system having a radar sensor (10) and a control device (12), **characterized in that** the control device is designed to carry out the method according to one of the preceding claims.

## Revendications

1. Procédé de fonctionnement d'un système d'assistance à la conduite de véhicules automobiles qui comporte un capteur radar (10) et une portée fonctionnelle variable, le procédé comprenant les étapes suivantes :
- estimer l'erreur d'ajustement sur la base d'une mesure effectuée sur une première période de fonctionnement limitée (34 ; 46),
- limiter la portée fonctionnelle du système d'assistance à la conduite en fonction de l'erreur de réglage estimée,
- poursuivre la mesure pendant le fonctionnement avec une portée fonctionnelle limitée pendant une deuxième période de fonctionnement (40), **caractérisé en ce que**
- lorsque le capteur radar est en fonctionnement, le capteur radar est continuellement ré-étalonné pour compenser les erreurs d'ajustement,
- la précision de l'estimation de l'erreur d'ajustement est améliorée sur la base de la poursuite de la mesure pendant une deuxième période de fonctionnement, et
- la portée fonctionnelle est étendue en fonction de l'amélioration de la précision d'estimation.

2. Procédé selon la revendication 1, dans lequel la limitation de la portée fonctionnelle comprend une réduction de la portée du capteur radar (10).

3. Procédé selon la revendication 1 ou 2, dans lequel le système d'assistance à la conduite comporte une pluralité de fonctions d'assistance (16) et la limitation de la portée fonctionnelle comprend la désactivation d'une de ces fonctions d'assistance.

4. Procédé selon l'une des revendications précédentes, dans lequel l'extension de la portée fonctionnelle est effectuée successivement en plusieurs étapes, chacune après une amélioration de la précision d'estimation.

5. Procédé selon l'une des revendications précédentes, dans lequel les étapes de la revendication 1 sont effectuées immédiatement après le démarrage du système d'assistance à la conduite.

6. Procédé selon l'une des revendications précédentes, dans lequel les étapes de la revendication 1 sont répétées lors d'une phase d'utilisation (44) du système d'assistance à la conduite.

7. Système d'aide à la conduite comprenant un capteur radar (10) et un dispositif de commande (12), **caractérisé en ce que** le dispositif de commande est conçu pour mettre en œuvre le procédé selon l'une des revendications précédentes.
